# EUROPÄISCHE PATENTANMELDUNG

(11) **EP 1 398 700 A1**
(43) Veröffentlichungstag der Anmeldung: **17.03.2004**
(21) Anmeldenummer: 02027847.9
(22) Anmeldetag: 12.12.2002
(51) Int. Cl.: G06F 11/16

(54) **Verfahren und Schaltungsanordnung zur Synchronisation redundanter Verarbeitungseinheiten**

(30) Priorität: 12.09.2002 EP 02020602
(71) Anmelder: SIEMENS AKTIENGESELLSCHAFT, 80333 München (DE)
(72) Erfinder: Peleska, Pavel, 82166 Gräfelfing (DE); Schnabel, Dirk, 81369 München (DE); Weber, Anton, 81825 München (DE)

(57) **Zusammenfassung**

Für redundante Systeme werden vielfach identisch aufgebaute Prozessorboards vorgesehen, die im Lockstep-Betrieb arbeiten. Die grundlegende Voraussetzung für die Implementierung eines Lockstep Systems ist das deterministische Verhalten aller im Board enthaltenen Komponenten, also CPUs, Chip Sets, Hauptspeicher etc. Deterministisches Verhalten bedeutet dabei, daß diese Komponenten im fehlerfreien Fall identische Ergebnisse zu identischen Zeitpunkten liefern, wenn die Komponenten identische Stimuli zu identischen Zeitpunkten erhalten. Deterministisches verhalten setzt ferner die Verwendung taktsynchroner Schnittstellen voraus. Asynchrone Schnittstellen bewirken im System in vielen Fällen eine gewisse zeitliche Unschärfe, wodurch das taktsynchrone Gesamtverhalten des Systems nicht aufrecht erhalten werden kann. Um dennoch einen Lockstep-Betrieb durchführen zu können, sieht die vorliegende Erfindung ein im Unterschied zu bekannten Softwarelösungen in Hardware realisiertes Verfahren zur Synchronisation identischer oder verschiedener, redundanter Verarbeitungseinheiten (PRO₀, PRO₁), die identische Instruktionsfolgen abarbeiten und synchron oder asynchron getaktet sind, vor, demgemäß nach außerhalb der Verarbeitungseinheiten (PRO₀, PRO₁) wirkende Transaktionen durch den Verarbeitungseinheiten (PRO₀, PRO₁) zugeordnete Bausteine (EQ₀, EQ₁) zur Synchronisation der Verarbeitungseinheiten (PRO₀, PRO₁) verwendet werden, indem die Verarbeitungseinheiten jeweils durch die zugeordneten Bausteine verzögert werden, bis die Instruktionsausführung aller Verarbeitungseinheiten die aktuelle Transaktion erreicht hat.

## Beschreibung

In Telekommunikationssystemen, in Data-Centern und anderen hochverfügbaren Systemen werden in vielen Fällen bis zu einigen Hundert sogenannter Prozessorboards eingesetzt, um die erforderliche Rechenleistung vorzusehen. Ein solches Prozessorboard besteht typischerweise aus einem Prozessor bzw. einer CPU (Central Processing Unit), einem Chip Set, Hauptspeicher und Peripheriebausteinen.

Die Wahrscheinlichkeit des Auftretens eines Hardware-Defektes eines typischen Prozessorboards pro Jahr liegt im einstelligen Prozentbereich. Aufgrund der großen Anzahl zu einem System zusammengefaßter Prozessorboards ergibt sich eine auf den Jahreszeitraum bezogene sehr hohe Wahrscheinlichkeit eines Ausfalls einer beliebigen Hardware-Komponente, wobei ein solcher Einzelausfall, falls geeignete Vorkehrungen nicht getroffen werden, den Ausfall des gesamten Systems hervorrufen kann.

Insbesondere an Telekommunikationssysteme, in zunehmendem Maße auch an Data-Center, wird die Forderung nach einer hohen Systemverfügbarkeit gestellt. Diese wird beispielsweise in Prozent ausgedrückt, oder es wird die maximal zulässige Ausfallzeit pro Jahr angegeben. Typische Anforderungen sind z.B. eine Verfügbarkeit von >99.999% bzw. eine Nichtverfügbarkeit von höchstens einigen Minuten im Jahr. Da üblicherweise der Austausch eines Prozessorboards und die Wiederherstellung des Dienstes im Falle eines Hardwaredefektes eine Zeit beansprucht, die im Bereich einige 10 Minuten bis einige Stunden liegt, müssen für den Fall eines Hardwaredefektes auf Systemebene entsprechende Vorkehrungen getroffen werden, um die Forderung nach der Systemverfügbarkeit erfüllen zu können.

Bekannte Lösungen zur Einhaltung solch hoher Anforderungen an die Systemverfügbarkeit sehen redundante Systemkomponenten vor. Die bekannten Verfahren lassen sich in zwei hauptsächliche Gruppen einteilen: softwarebasierte Verfahren und hardwarebasierte Verfahren.

Bei softwarebasierten Verfahren wird typischerweise eine Middleware eingesetzt. Die softwarebasierte Lösung erweist sich jedoch als wenig flexibel, da lediglich diejenige (Applikations-)Software in einem solchen System eingesetzt werden kann, die für dieses besondere Redundanzschema entwickelt wurde. Dies schränkt das Spektrum einsetzbarer (Applikations)Software erheblich ein. Darüber hinaus ist die Entwicklung von Applikationssoftware für Softwareredundanzprinzipien in der Praxis äußerst aufwendig, wobei die Entwicklung zusätzlich ein kompliziertes Testverfahren nach sich zieht.

Das Grundprinzip hardwarebasierter Verfahren beruht darauf, die Redundanz auf Hardwareebene zu kapseln, so daß dies für die Software transparent ist. Der wesentliche Vorteil einer von der Hardware selbst verwalteten Redundanz ist der, daß die Applikationssoftware durch das Redundanzprinzip nicht beeinträchtigt wird und somit in den meisten Fällen jede beliebige Software zum Einsatz kommen kann.

Ein in der Praxis häufig anzutreffendes Prinzip für hardwarefehlertolerante Systeme, deren Redundanz für die Software transparent ist, ist das sogenannte Lockstep-Prinzip. Lockstep bedeutet, daß identisch aufgebaute Hardware, z.B. zwei Boards, gleichartig taktsynchron betrieben werden. Durch Hardwaremechanismen wird sichergestellt, daß die redundante Hardware zu einem gegebenen Zeitpunkt identische Eingangsstimuli, erfährt und dadurch zu identischen Ergebnissen kommen muß. Die Ergebnisse der redundanten Komponenten werden verglichen, im Fall einer Abweichung wird ein Fehler festgestellt und geeignete Maßnahmen werden eingeleitet (Alarmierung an das Bedienpersonal, partielle oder vollständige Sicherheitsabschaltung, Systemneustart).

Die grundlegende Voraussetzung für die Implementierung eines Lockstep-Systems ist das taktweise deterministische Verhalten aller im Board enthaltenen Komponenten, also CPUs, Chip Sets, Hauptspeicher etc. Taktweise deterministisches Verhalten bedeutet dabei, daß diese Komponenten im fehlerfreien Fall identische Ergebnisse zu identischen Takt-Zeitpunkten liefern, wenn die Komponenten identische Stimuli zu identischen Takt-Zeitpunkten erhalten. Taktdeterministisches Verhalten setzt ferner die Verwendung taktsynchroner Schnittstellen voraus. Asynchrone Schnittstellen bewirken im System in vielen Fällen eine gewisse zeitliche Unschärfe, wodurch das taktsynchrone Gesamtverhalten des Systems nicht aufrecht erhalten werden kann.

Gerade für Chip Sets und CPUs bieten asynchrone Schnittstellen jedoch technologische Vorteile bei der Erhöhung der Leistungsfähigkeit, wodurch eine taktsynchrone Betriebsweise nach dem Lockstep-Verfahren unmöglich wird. Zudem verwenden moderne CPUs zunehmend Mechanismen, die eine taktsynchrone Betriebsweise unmöglich machen. Dies sind beispielsweise interne, nach außen nicht sichtbare Korrekturmaßnahmen, z.B. Korrektur eines internen, korrigierbaren Fehlers beim Zugriff auf den Cache-Speicher, die zu einer geringfügigen Verzögerung der Befehlsabarbeitung führen können, oder die spekulative Ausführung von Befehlen. Ein weiteres Beispiel ist die zukünftig zunehmende Implementierung von CPU-internen taktfreien Ausführungseinheiten, die erhebliche Vorteile hinsichtlich Geschwindigkeit und Verlustleistung ermöglichen, jedoch ein taktsynchrones bzw. deterministisches Arbeiten der CPU verhindern.

Es ist daher eine Aufgabe der vorliegenden Erfindung, ein Verfahren anzugeben, durch welches die Vorteile des Lockstep-Verfahrens zu gewahrt bleiben und welches der technologischen Entwicklung Rechnung trägt.

Diese Aufgabe wird durch ein Verfahren zur Synchronisation synchron oder asynchron getakteter Verarbeitungseinheiten gemäß der Merkmale des Patentanspruchs 1 und eine Schaltungsanordnung zur Synchronisation synchron oder asynchron getakteter Verarbeitungseinheiten gemäß der Merkmale des Patentanspruchs 13 gelöst.

Bevorzugte Ausführungsformen sind Gegenstand der abhängigen Ansprüche.

Erfindungsgemäß wird ein Verfahren zur Synchronisation identischer oder verschiedener, redundanter Verarbeitungseinheiten PRO₀, PRO₁, die identische Instruktionsfolgen abarbeiten und synchron oder asynchron getaktet sind, vorgesehen, demgemäß nach außerhalb der Verarbeitungseinheiten PRO₀, PRO₁ wirkende Transaktionen durch den Verarbeitungseinheiten PRO₀, PRO₁ zugeordnete Bausteine EQ₀, EQ₁ zur Synchronisation der Verarbeitungseinheiten PRO₀, PRO₁ verwendet werden, indem die Verarbeitungseinheiten jeweils durch die zugeordneten Bausteine verzögert und dadurch angeglichen werden, bis die Instruktionsausführung aller Verarbeitungseinheiten die aktuelle Transaktion erreicht hat.

Dabei können folgende Transaktionen zur Synchronisation verwendet werden:
- nicht-zwischenspeicherbare Speichertransaktionen betreffend einen den jeweiligen Verarbeitungseinheiten PRO₀, PRO₁ zugeordneten lokalen Speicher MEM₀, MEM₁ und/oder
- Eingabe/Ausgabetransaktionen zu Eingabe/Ausgabebausteinen I/O₀, I/O₁ und/oder
- speicherabgebildete Ein/Ausgabetransaktionen zu externen Registern REG₀, REG₁ und/oder
- nicht-zwischenspeicherbare Speichertransaktionen betreffend einen gemeinsamen Speicher CMEM der Verarbeitungseinheiten PRO₀, PRO₁.

Lesende Transaktionen können dabei ausgeführt werden, indem der einer Verarbeitungseinheit zugeordnete Baustein die Verarbeitungseinheit bis zum Eintreffen der zu lesenden Daten im Wartezustand beläßt und den oder die Parameter der lesenden Transaktion an den am direktesten mit dem Transaktionsziel I/O₀,I/O₁, MEM₀, MEM₁, REG₀, REG₁, CMEM verbundenen Baustein sendet, wobei der am direktesten mit dem Transaktionsziel verbundene Baustein den oder die Parameter der anderen Bausteine sowie den oder die lokal erzeugten Parameter empfängt und vergleicht und bei Übereinstimmung die lesende Transaktion ausführt und die gelesenen Daten an alle Bausteine verteilt, woraufhin alle Bausteine die gelesenen Daten an die zugeordneten Verarbeitungseinheiten weiterleiten und die Fortsetzung der Instruktionsausführung ermöglichen.

Schreibende Transaktionen können ausgeführt werden, indem der einer Verarbeitungseinheit zugeordnete Baustein die Verarbeitungseinheit bis zum Abschluß des Schreibenvorganges im Wartezustand belassen kann und den oder die Parameter der schreibenden Transaktion an den am direktesten mit dem Transaktionsziel I/O₀,I/O₁, MEM₀, MEM₁, REG₀, REG₁, CMEM verbundenen Baustein sendet, wobei der am direktesten mit dem Transaktionsziel verbundene Baustein den oder die Parameter der anderen Bausteine sowie den oder die lokal erzeugten Parameter empfängt und vergleicht und bei Übereinstimmung die schreibende Transaktion ausführt und den erfolgten Schreibvorgang an alle Bausteine quittiert, woraufhin alle Bausteine die Fortsetzung der Instruktionsausführung der zugeordneten Verarbeitungseinheiten ermöglichen.

Vorteilhaft lassen sich externe Ereignisse, z.B. Interrupts, im Zusammenhang mit dem erfindungsgemäßen Synchronisationsverfahren basierend auf Transaktionen behandeln, wenn die Behandlung der externen Ereignisse durch das Lesen eines Wertes, z.B. Interruptvektor, von einer Speicherstelle oder eines Registers eingeleitet wird und zudem sichergestellt ist, daß alle Verarbeitungseinheiten an der gleichen Stelle der Befehlsausführung die externen Ereignisse präsentiert bekommen. Die die Ereignisbehandlung einleitende lesende Transaktion wird wie oben beschrieben durchgeführt, z.B. mittels eines Interrupt Acknowledge Zyklus.

Ein geeignetes Verfahren zur Synchronisation externer Ereignisse ist in der Europäischen Patentanmeldung 02020602 beschrieben und sieht vor, daß die externen Ereignisse zwischengespeichert werden, wobei die gespeicherten externen Ereignisse in einem gesonderten Betriebsmodus der Verarbeitungseinheiten zur Verarbeitung durch zumindest je eine Ausführungseinheit der Verarbeitungseinheiten abgerufen werden und wobei die Verarbeitungseinheiten in diesen Betriebsmodus ansprechend auf die Erfüllung einer durch Befehle vorgebbaren oder fest vorgegebenen Bedingung eintreten und die Fortsetzung der Instruktionsausführung durch die Bausteine EQ₀, EQ₁ verzögert wird, bis alle Verarbeitungseinheiten den gesonderten Betriebsmodus beendet haben.

Der Wechsel in den gesonderten Betriebsmodus wird beispielsweise ausgeführt, falls durch Komparatorelemente K der Verarbeitungseinheiten die Übereinstimmung von Zählelementen CIC mit Registerelementen MIR ermittelt wird, wobei der Inhalt der Registerelemente MIR durch Befehle vorgebbar und für alle Verarbeitungseinheiten PRO₀, PRO₁ identisch ist und das Zählelement CIC die Anzahl der durch die Ausführungseinheit ausgeführten Instruktionen seit dem letzten Wechsel in den gesonderten Betriebsmodus enthält.

Eine Fehlerbehandlung kann eingeleitet werden, falls der am direktesten mit dem Transaktionsziel verbundene Baustein eine Abweichung der Parameter der anderen Bausteine sowie des oder der lokal erzeugten Parameter(s) feststellt. Die Fehlerbehandlung kann dabei die auszuführende Transaktion stoppen und eine Routine zur Diagnose, Fehlerisolierung und gegebenenfalls zur Wiederherstellung der Synchronität starten. Sind N (z.B. N=3) Verarbeitungseinheiten vorhanden, kann eine (N-1) aus N Mehrheitsentscheidung oder allgemein eine (N-M) aus N Mehrheitsentscheidung getroffen und die abweichende(n) Verarbeitungseinheit(en) deaktiviert werden.

Ferner kann eine Ausfallerkennung einzelner Verarbeitungseinheiten erfolgen, indem für eine beliebige Transaktion beginnend mit dem frühesten Verfügbarwerden des oder der Parameter(s) beim Baustein einer Verarbeitungseinheit nicht oder erst nach Ablauf einer vorgebbaren Zeit eintreffende Parameter verworfen werden, wobei für Verarbeitungseinheiten mit nicht oder erst nach Ablauf der vorgebbaren Zeit eintreffenden Parametern eine Fehlerbehandlung initiiert wird.

Die Erfindung sieht ferner eine Anordnung zur Synchronisation synchron oder asynchron getakteter Verarbeitungseinheiten PRO₀, PRO₁ redundanter Datenverarbeitungssysteme vor, die folgendes aufweist:
- mindestens zwei Verarbeitungseinheiten PRO₀, PRO₁ zur Abarbeitung identischer Instruktionsfolgen,
- den Verarbeitungseinheiten jeweils exklusiv zugeordnete Peripherie MEM₀, MEM₁ zum Speichern und/oder Austauschen von Daten,
- von allen Verarbeitungseinheiten gemeinsam nutzbare Peripherie I/O₀, I/O₁, REG₀, REG₁, CMEM zum Speichern und/oder Austauschen von Daten,
- den Verarbeitungseinheiten zugeordnete Bausteine EQ₀, EQ₁, wobei die Bausteine EQ₀, EQ₁ Mittel zum Überwachen von Transaktionen sowie Mittel zum Anhalten der zugeordneten Verarbeitungseinheit bis zum Erreichen der aktuellen Transaktion durch alle Verarbeitungseinheiten aufweisen sowie Mittel L₀, L₁ zum Übertragen von Parametern der Transaktionen an andere Bausteine.

Die Bausteine EQ₀, EQ₁ können dabei Mittel zum Synchronisieren der Verarbeitungseinheiten insbesondere anhand folgender Transaktionen aufweisen:
- nicht-zwischenspeicherbare Speichertransaktionen betreffend einen den jeweiligen Verarbeitungseinheiten PRO₀, PRO₁ zugeordneten lokalen Speicher MEM₀, MEM₁ und/oder
- Eingabe/Ausgabetransaktionen zu Eingabe/Ausgabebausteinen I/O₀, I/O₁ und/oder
- speicherabgebildete Ein/Ausgabetransaktionen zu externen Registern REG₀, REG₁ und/oder
- nicht-zwischenspeicherbare Speichertransaktionen betreffend einen gemeinsamen Speicher CMEM der Verarbeitungseinheiten PRO₀, PRO₁.

Dabei weisen die Bausteine vorteilhaft Mittel zum Bilden folgender Parameter repräsentativ für Transaktionen auf:
- Eingabe/Ausgabeadressen und/oder
- Speicheradressen und/oder
- zu transferierende Daten und/oder
- Art der Transaktion und/oder
- eine aus den Eingabe/Ausgabeadressen und/oder den Speicheradressen und/oder den zu transferierenden Daten und/oder der Art der Transaktion gebildete Signatur.

Zur Behandlung externer Ereignisse wie z.B. Interrupts weisen die Verarbeitungseinheiten vorzugsweise folgendes auf:
- mindestens eine Ausführungseinheit EU,
- mindestens ein Zählerelement CIC zum Zählen der durch die Ausführungseinheit ausgeführten Instruktionen seit dem letzten Wechsel in den gesonderten Betriebsmodus,
- mindestens ein Registerelement MIR, dessen Inhalt durch Befehle vorgebbar oder fest vorgegeben ist,
- mindestens ein Komparatorelement K zum Umschalten der Ausführungseinheit EU in einen gesonderten Betriebsmodus ansprechend auf die Übereinstimmung des Zählelementes CIC mit dem Registerelement MIR, wobei in dem gesonderten Betriebsmodus zwischengespeicherte, den Prozessorbausteinen zuzuführende externe Ereignisse, welche die Prozessorbausteine beeinflussen, durch die Prozessorbausteine abgerufen werden.

Der Abruf der zwischengespeicherten externen Ereignisse kann dabei vorteilhaft mittels Software, Firmware, Microcode oder Hardware erfolgen.

Ein wesentlicher Vorteil der Erfindung ist darin zu sehen, daß die Verwendung beliebiger neuer oder bestehender Software auf einer hardwarefehlertoleranten Plattform ermöglicht wird, wobei in dieser Plattform eine die Erfindung unterstützende Verarbeitungseinheit zum Einsatz kommen kann, ohne daß die Forderung nach taktsynchroner, deterministischer Arbeitsweise der CPU besteht.

Weitere Vorteile sind:
- Die zueinander redundanten Verarbeitungseinheiten, die beispielsweise aus einer CPU, einer Northbridge und lokalem Speicher gebildet werden, müssen nicht phasenstarr gekoppelt betrieben werden.
- Die CPUs müssen nicht identisch sein, was insbesondere den gleichzeitigen Einsatz verschiedener CPU-Steppings innerhalb eines redundanten Systems ermöglicht, und können mit unterschiedlichen Taktfrequenzen betrieben werden.
- Die CPUs können sich unterschiedlich in Bezug auf die spekulative Ausführung von Instruktionen verhalten.
- Unterschiedliche CPU-interne Ausführungszeiten identischer CPUs, z.B. aufgrund von Korrekturen nach dem datenverfälschendem Auftreten von Alpha-Teilchen, führen lediglich dazu, daß die Synchronisationsereignisse zu geringfügig unterschiedlichen Zeitpunkten erreicht werden.

Die beschriebenen Probleme bei der Sicherstellung der taktsynchron deterministischen Arbeitsweise führen aufgrund der zeitlichen Unschärfe zukünftiger CPUs zu zeitlich nicht exakt korrelierbarer Befehlsausführung. Da die CPU bei einer typischen Applikation auf externe Ereignisse reagieren muß, z.B. auf einen von einem Peripheriegerät generierten Interrupt oder auf Daten, die von einem Gerät in den Hauptspeicher geschrieben wurden, muß sichergestellt werden, daß die CPU von diesen Ereignissen an identischen Stellen in der Befehlsausführung in Kenntnis gesetzt wird, da sonst die Bewertung dieser Ereignisse zu unterschiedlichen Programmabläufen redundanter CPUs führen könnte.

Die vorliegende Erfindung sorgt dafür, daß externe, für den Programmablauf relevante Ereignisse, wie z.B. Interrupts oder von externen Geräten erzeugte Daten, redundanten CPUs an identischen Stellen der Befehlsausführung präsentiert werden und dadurch die Lockstep-Betriebsweise emuliert werden kann.

Außerdem werden Ausgabeereignisse redundanter CPUs, die an identischen Stellen der Befehlsausführung präsentiert werden, verglichen und die Ergebnisse somit validiert. Im Gegensatz zu bekanntenen Verfahren, die die Synchronisation und die Verteilung von Daten aus der Prozessor-Peripherie durch Software-basierte Methoden bewerkstelligen, wird dies erfindungsgemäß durch Hardware realisiert. Ein entscheidender Vorteil dabei ist, daß der Performanceeinfluß im Vergleich zu den softwarebasierten Verfahren um ein Vielfaches geringer ist. Das beschriebene Verfahren ist darüber hinaus für die Applikations- und Betriebssystem-Software völlig transparent, d.h. existierende Applikations- und Betriebssystem-Software kann ohne Modifikationen weiterhin eingesetzt werden.

Im folgenden wird ein Ausführungsbeispiel der Erfindung im Zusammenhang mit drei Figuren näher erläutert.
- Figur 1: zeigt schematisch zwei Verarbeitungseinheiten mit zugeordneter Peripherie und Synchronisation von Transaktionen.
- Figur 2: zeigt schematisch zwei Verarbeitungseinheiten, die anhand ihrer Peripherietransaktionen mittels zweier Bausteine synchronisiert werden.
- Figur 3: zeigt schematisch den Aufbau einer bevorzugten Verarbeitungseinheit mit weiteren Details.
- Figur 4: zeigt ein Zeitdiagramm der Befehlsabarbeitung zweier verschieden getakteter Verarbeitungseinheiten sowie deren erfindungsgemäße Synchronisierung.

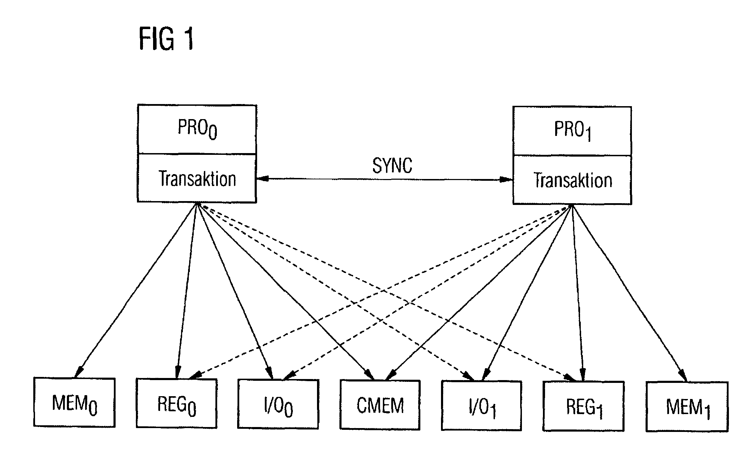

In Figur 1 sind zwei Verarbeitungseinheiten PRO₀, PRO₁ schematisch dargestellt, deren extern wirkende Transaktionen synchronisiert werden. Beispielhaft sind Transaktionen zu folgenden Komponenten dargestellt: lokaler Speicher MEM₀, MEM₁, Register REG₀, REG₁ und Eingabe/Ausgabebausteine bzw. I/O-Bausteine I/O₀, I/O₁. Dabei sind der ersten Verarbeitungseinheit PRO₀ erste Komponenten MEM₀, REG₀ und I/O₀ zugeordnet, während der zweiten Verarbeitungseinheit PRO₁ zweite Komponenten MEM₁, REG₁ und I/O₁ zugeordnet sind. Wie durch entsprechende gestrichelte Verbindungen angedeutet, haben die Verarbeitungseinheiten Zugriff auf die Register REGₙ und die I/O-Bausteine I/Oₘ der jeweils anderen Verarbeitungseinheit, während auf den lokalen Speicher MEMₖ nur die zugeordnete Verarbeitungseinheit PROₖ Zugriff hat.

Ferner ist beispielhaft eine Komponente dargestellt, auf welche die Verarbeitungseinheiten gemeinsam zugreifen, hier gemeinsamer Speicher CMEM, wobei im Unterschied zu den Registern und den I/O-Bausteinen der gemeinsame Speicher keiner der Verarbeitungseinheiten zugeordnet ist.

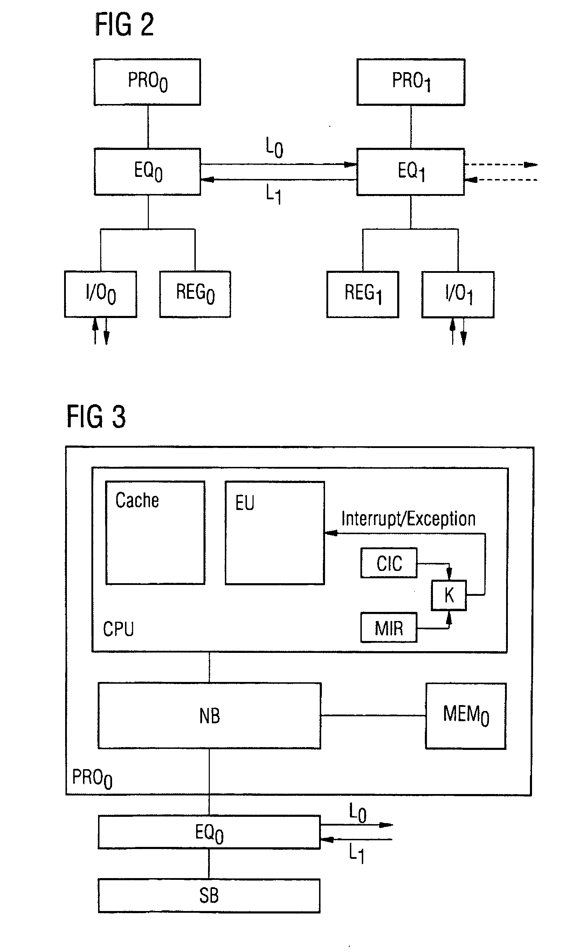

Figur 2 zeigt wiederum die beiden Verarbeitungseinheiten und beispielhaft die I/O-Bausteine sowie die Register aus Figur 1. Diese sind nicht herkömmlich direkt über entsprechende Schnittstellen oder Schnittstellenbausteine verbunden, sondern mittels Equalizer-Bausteinen EQ₀, EQ₁. Alle Zugriffe der Verarbeitungseinheit PRO₀ werden durch den Equalizer EQ₀ empfangen, verarbeitet und entsprechend weitergeleitet, ebenso werden der Verarbeitungseinheit PRO₀ alle externen Daten und Ereignisse durch den Equalizer EQ₀ präsentiert. Analog ist der Verarbeitungseinheit PRO₁ ein gleichwertiger Equalizer EQ₁ zugeordnet.

Die Equalizer EQ₀, EQ₁ tauschen Informationen aus und weisen dazu vorteilhaft eine schnelle und direkte Verbindung L₀, L₁ auf. Diese Verbindung kann, wie dargestellt, logisch und/oder physikalisch in eine erste Verbindung L₀: EQ₀ -> EQ₁ und eine zweite Verbindung L₁: EQ₁ -> EQ₀ aufgeteilt sein.

Wie in Figur 2 gestrichelt angedeutet, können gemäß vorliegender Erfindung auch weitere Einheiten bestehend aus je einer Verarbeitungseinheit PRO, einem Equalizer EQ und Peripherie REG, I/O angeschlossen sein, um ein entsprechend mehrfach redundantes System zu bilden. Durch Zufügen einer weiteren derartigen Einheit würde ein 3fach redundantes System entstehen, in dem bereits eine Fehlerbehandlung durch 2 aus 3 Mehrfachentscheidung stattfinden kann.

Figur 3 zeigt schließlich eine detailliertere Realisierung der Erfindung im Zusammenhang mit einer herkömmlichen Prozessor/Peripheriearchitektur, die sich dadurch auszeichnet, daß eine Hauptprozessor CPU über eine Northbridge-Schnittstelleneinheit NB mit einer Southbridge-Schnittstelleneinheit SB gekoppelt ist, wobei die Northbridge z.B. auch die Schnittstelle mit dem lokalen Speicher MEM₀ umfaßt, während die Southbridge z.B. einen Interrupt-Controller und andere I/O-Funktionen umfaßt.

Wie in Figur 3 beispielhaft dargestellt, kann eine Verarbeitungseinheit PRO₀ aus einer CPU, einer Northbridge und lokalem Speicher aufgebaut sein. Die CPU in einer besonders vorteilhaften Ausgestaltung kann neben den herkömmlichen Einheiten, von denen zur Vereinfachung nur ein Cache-Speicher und eine Ausführungseinheit EU dargestellt sind, ein Register MIR, einen Zähler CIC und einen Vergleicher bzw. Komparator K enthalten, die dazu dienen, externe Ereignisse wie Interrupts und Exceptions nur an bestimmten Stellen in der Befehlsausführung an die Ausführungseinheit weiterzuleiten und einen ansonsten unterbrechungsfreien Ablauf der Abarbeitung von Instruktionsfolgen zu gewährleisten.

Der erfindungsgemäße Equalizer-Baustein EQ₀ ist vorzugsweise zwischen der Northbridge und der Southbridge angeordnet, da die Schnittstelle zwischen Northbridge und Southbridge alle notwendigen Signalleitungen aufweist, um es dem Equalizer zu ermöglichen, die Abarbeitung der Instruktionsfolgen anzuhalten, bis Synchronität der Verarbeitungseinheit PRO₀ mit benachbarten Verarbeitungseinheiten (nicht dargestellt) erreicht ist. Nur angedeutet sind die Verbindungen L₀, L₁ zur Verbindung des Equalizers EQ₀ mit Equalizern benachbarter Verarbeitungseinheiten.

Die in Figur 3 aufgezeigte logische Gruppierung entspricht nicht notwendigerweise der tatsächlichen physikalischen Gruppierung der einzelnen Komponenten. Beispielsweise kann die Northbridge in die CPU integriert sein, oder der Equalizer kann in die Northbridge oder die Southbridge integriert sein oder gemeinsam mit der Northbridge in die CPU.

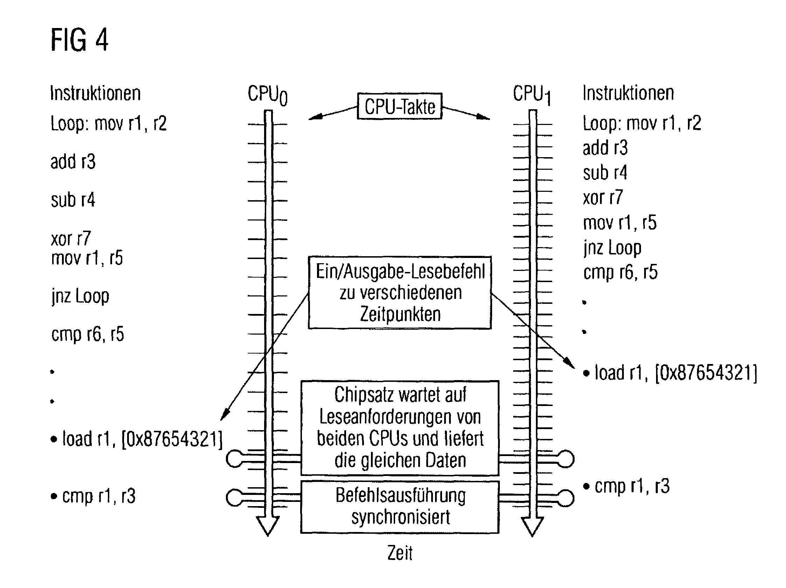

Figur 4 stellt die Synchronisierung der Befehlsausführung zweier Verarbeitungseinheiten in einem Zeitablaufdiagramm grafisch dar. In dem in Figur 4 dargestellten Beispiel werden identische Instruktionsfolgen durch zwei CPUs CPU₀ und CPU₁ abgearbeitet, wobei CPU₀ mit einer geringeren Taktrate betrieben wird als CPU₁. Damit erreicht CPU₁ jeden Befehl zu einem früheren Zeitpunkt als CPU₀, vorausgesetzt, daß zu Beginn, d.h. bei Abarbeitung der mov r1, r2, sämtliche Register und den CPUs zugeordnete Speicher synchronisiert waren.

Diese nicht synchrone Befehlsabarbeitung ist tolerierbar, solange die CPU nicht in Interaktion mit der Außenwelt, beispielsweise mittels I/O-Bausteinen oder Zugriffen auf gemeinsamen Speicher, tritt. Für derartige Transaktionen, im Beispiel der Figur 4 das Auslesen des I/O-Registers 0x87654321, ist es allerdings erforderlich, daß diese Transaktionen für beide CPUs gleichzeitig und insbesondere mit dem gleichen Ergebnis stattfinden. Dies wird mittels der Equalizer, wie im folgenden beschrieben, erreicht. Gleichzeitig sorgen die Equalizer an solchen Transaktionspunkten dafür, daß die Synchronität der CPUs wiederhergestellt wird.

In Anlehnung an die Lockstep-Betriebsweise wird das erfindungsgemäße Verfahren im folgenden emulierter Lockstep genannt. Eine Realisierung für den emulierten Lockstep besteht aus mindestens zwei Verarbeitungseinheiten PRO₀ und PRO₁, die aus einer CPU, Speicher sowie Speicheransteuerung (Northbridge eines Standard-Chipsatzes) bestehen können. Diese Verarbeitungseinheiten sind identisch aufgebaut, können jedoch verschiedene CPUs oder verschiedene Steppings einer CPU aufweisen, und werden in identischem Zustand, d.h. identische Speicher- und CPU-Registerinhalte, gestartet. Eine Kopplung über gemeinsame oder synchronisierte Takte ist erfindungsgemäß nicht erforderlich.

Von den CPUs werden im Rahmen der Maschinenbefehlsausführung Speicherzyklen, beispielsweise Schreibzyklen, Lesezyklen und gegebenenfalls I/O-Zyklen initiiert. Zur Synchronisation der CPUs, gegebenenfalls mit Datenaustausch zwischen den CPUs, sind alle Zyklen geeignet, die folgende Bedingungen erfüllen:
(a) sie sind instruktionsdeterministisch, d.h. sie werden identisch von allen CPUs an derselben Programmstelle und in derselben Reihenfolge abgesetzt, und
(b) sie werden von den CPUs immer nach außen abgesetzt, d.h. sie sind immer außerhalb der Prozessoren sichtbar und abgreifbar; prozessorinterne Cachezyklen sind z.B. ungeeignet.

Folgende Speicherzyklen erfüllen beispielsweise diese Randbedingungen:
- nicht-zwischenspeicherbare bzw. non-cachable Speicherzyklen in den eigenen Speicher MEM₀, MEM₁,
- I/O-Zyklen,
- speicherabgebildete bzw. memory mapped I/O-Zyklen, beispielsweise an externe Register REG₀, REG₁,
- nicht-zwischenspeicherbar non-cachable Speicherzyklen an einen externen gemeinsamen Speicher CMEM.

Verschiedene externe Register, z.B. Timer bzw. Zeitgeber, Counter bzw. Zähler und/oder eine Interruptlogik, sowie I/O-Einheiten zur Außenwelt, z.B. Ethernet-Controller oder SCSI-Controller, stehen in der Regel in Kommunikation mit der CPU. Zwischen CPU und I/O-Einheit ist für jede CPU je ein Equalizer über ein asynchrones oder synchrones Interface angeschaltet, der den emulierten Lockstep-Betrieb realisiert. Zwischen den Equalizern EQ₀, EQ₁ sind asynchrone oder synchrone Punkt-zu-Punkt Verbindungen L₀, L₁ erforderlich, um Daten, Adressen oder Signaturen austauschen zu können. Auf den asynchronen Interfaces ist im Fall von Übertragungsfehlern eine Wiederholung der Übertragung vorsehbar.

Ein lesender oder schreibender Zugriff auf I/O-Einheiten oder Register findet als speicherabgebildete bzw. memory mapped I/O oder direct I/O statt. Die I/O-Einheiten sind alle sichtbar und über getrennte Speicheradressen erreichbar. Dagegen können die Register in einer Master-Master oder einer Master-Slave-Konfiguration geschaltet werden. Bei der Master-Master Konfiguration werden die Register der jeweils zugeordneten Verarbeitungseinheit lesend oder schreibend angesprochen. Voraussetzung für diese Betriebsweise ist, daß Register beim Zugriff der Verarbeitungseinheiten denselben Zustand aufweisen, um die parallele Betriebsweise der Einheiten zu gewährleisten.

Bei der Master-Slave Konfiguration werden von allen Einheiten ausschließlich die Register der Master-Einheit gelesen und die Register der Master-Einheit werden nur von der Master-Einheit beschrieben. Beispielsweise wird zum Auslesen der aktuellen Uhrzeit von allen Einheiten der Time-of-Day-Counter (ToD) der Master-Einheit verwendet, um sicherzustellen, daß alle Einheiten beim Auslesen des ToD-Counters mit exakt derselben Uhrzeit versorgt werden, d.h. nur die einer Verarbeitungseinheit zugeordneten Register werden angesprochen. Ereignisse, wie z.B. Interrupts, die auf anderen Einheiten stattfinden, müssen dann an die Mastereinheit übermittelt werden. Schreibende Zugriffe in diese Register müssen auf allen Einheiten stattfinden bzw. im Hauptspeicher in Schattenregistern hinterlegt werden, um im Fehlerfall mit korrekten Daten mit einer neuen Mastereinheit weiterarbeiten zu können. Dies kann entweder mittels Software oder Hardware gesteuert werden.

Im folgenden werden einzelne Transaktionen und die anhand dieser Transaktionen stattfindenden Synchronisationsvorgänge näher beschrieben.

### Lesende Transaktionen

Der Read-Befehl einer CPU einer Verarbeitungseinheit PRO liest Daten aus einer I/O-Einheit. Ein solcher Lesebefehl ist in Figur 4 illustriert, es handelt sich beispielhaft um den Befehl load r1, [0x87654321]. Dieser Befehl wird von allen CPUs an der gleichen Stelle in der Befehlsausführung generiert und ist an eine bestimmte I/O-Einheit, beispielsweise I/O₀, oder ein Master-Register gerichtet. Der Zeitpunkt des Read-Befehls kann jedoch bei den CPUs unterschiedlich sein. In Figur 4 erreicht CPU₀ den genannten Lesebefehl später als CPU₁.

Die von der CPU erzeugte I/O- Adresse bzw. Speicher-Adresse und die Attribute der Transaktion, z.B. Memory Read oder I/O-Read oder Datenlänge, oder eine aus Adresse und Attributen erzeugte Signatur wird von dem an die CPU direkt angeschlossenen Equalizer an alle anderen Equalizer gesendet. Erst wenn der Equalizer, der an die adressierte I/O-Ressource angeschlossen ist, erkennt, daß die Leseanforderung von allen CPUs generiert worden ist, wird der eigentliche Lesezugriff ausgeführt. Die gelesenen Daten werden bei Master-Slave Konfigurationen an alle Equalizer verteilt, die danach den Read-Befehl der jeweils angeschlossenen CPU abschließen, indem sie die Daten an die CPU weitergeben. Die Daten können zu unterschiedlichen Zeitpunkten bei der CPU eintreffen, jedoch wird dadurch die weitere Programmausführung nicht beeinträchtigt.

Sollte die I/O-Adresse bzw. Signatur bei einem Equalizer abweichen, so wird der Lesezugriff entweder nicht ausgeführt und ein Fehlerinterrupt generiert, beispielsweise ein nicht maskierbarer Interrupt NMI zur CPU, oder es wird eine Mehrheitsentscheidung, z.B. 2 aus 3, getroffen, falls es sich um eine Konfiguration mit 3 vorhandenen CPUs handelt. Die fehlerhafte Einheit wird getrennt und diagnostiziert.

Zur Erkennung von Ausfällen einzelner Einheiten werden die Lesezugriffe zeitlich überwacht, d.h. die Read-Befehle aller CPUs müssen in einer gewissen, vorgebbaren Zeit generiert werden. Wird diese Zeitspanne zwischen den Befehlen überschritten, wird ein Timeout generiert, die ausgefallene Einheit wird getrennt und diagnostiziert.

Lesende Zugriffe werden in der Reihenfolge ihres Auftretens bearbeitet. Ein Überholen ist nicht vorgesehen.

### Schreibende Transaktionen

Der Write-Befehl schreibt Daten in eine I/O-Einheit oder eine Speicher-Einheit. Er wird von allen CPUs an der gleichen Stelle in der Befehlsausführung generiert und ist beispielsweise an eine bestimmte I/O-Einheit gerichtet, z.B. I/O₀. Der Zeitpunkt des Write-Befehls kann jedoch bei den CPUs unterschiedlich sein.

Die beispielsweise von der CPU erzeugte I/O-Adresse, das Datum und die Attribute oder eine daraus berechnete Signatur wird von dem direkt angeschlossenen Equalizer an alle anderen Equalizer gesendet. Erst wenn die Schreibanforderung von allen CPUs generiert worden ist und durch den Equalizer validiert wurde, wird der eigentliche Schreibzugriff ausgeführt.

Sollten die I/O-Adresse, das Datum und/oder die Attribute bzw. die Signatur bei einem Equalizer abweichen, so wird der Schreibzugriff entweder nicht ausgeführt und ein Fehlerinterrupt generiert, beispielsweise ein nicht maskierbarer Interrupt NMI zur CPU, oder es wird eine Mehrheitsentscheidung z.B. 2 aus 3, getroffen, falls es sich um eine Konfiguration mit 3 vorhandenen CPUs handelt. Die fehlerhafte Einheit wird getrennt und diagnostiziert.

Zur Erkennung von Ausfällen einzelner Einheiten werden die Schreibzugriffe zeitlich überwacht, d.h. die Write-Befehle aller CPUs müssen in einer gewissen, vorgebbaren Zeit generiert werden. Wird diese Zeitspanne zwischen den Befehlen überschritten, wird ein Timeout generiert, die ausgefallene Einheit wird getrennt und diagnostiziert.

Schreibende Zugriffe werden in der Reihenfolge ihres Auftretens bearbeitet. Ein Überholen ist nicht vorgesehen. Es ist jedoch möglich, daß mehrere Schreibzyklen von der CPU erzeugt werden (sogenannte Posted Writes). Für die Behandlung dieser mehrfachen schreibenden Transaktionen kann ein entsprechend dimensionierter first-in-first-out-Speicher (nicht dargestellt) vorgesehen werden.

### Interrupts

Die den Programmablauf beeinflussenden externen Ereignisse werden der CPU nicht direkt zugeführt, sondern von einer geeignet gestalteten Hardware zunächst gepuffert. Diese Hardware kann dabei Bestandteil eines Bausteins außerhalb der CPU oder Bestandteil der CPU selbst sein. Die CPU enthält einen Zähler CIC (Completed Instruction Counter), der Instruktionen oder Maschinenbefehle zählt, welche die CPU komplett ausgeführt hat. Die CPU enthält ferner ein Register MIR (Maximum Instruction Register), das von einer den emulierten Lockstep Betrieb unterstützenden Software (ELSO) beschrieben wird.

Ferner weist die CPU den Komparator oder Vergleicher K auf, der die Anzahl der ausgeführten Befehle, also den Zähler CIC, mit dem Register MIR vergleicht und bei Gleichheit beispielsweise eine Interrupt-Anforderung generiert, der die Befehlsausführung nach der Zahl der durch das Register MIR vorgegeben Instruktionen unterbricht und die CPU in einen anderen Betriebsmodus schaltet. In diesem Betriebsmodus wird beispielsweise geeigneter Microcode ausgeführt oder in eine Interrupt Service Routine verzweigt oder per Hardware-Signalen das Erreichen dieses Synchronisationspunktes angezeigt. In diesem Betriebsmodus werden dann den redundanten CPUs die externen Ereignisse so präsentiert, daß nach dem Verlassen dieses Betriebsmodus alle CPUs diese Ereignisse gleich bewerten können und somit in der Folge die gleichen Befehle ausführen werden.

Beispielsweise verzweigt die CPU nach Erreichen der durch das Register MIR vorgegeben Anzahl von Maschineninstruktionen in eine Interrupt Service Routine, in welcher der Zustand von durch die beschriebene Hardware von der CPU ferngehaltenen Interrupt Signalen so abgefragt wird, daß eine redundante CPU, die ggf. diese Abfrage zu einem geringfügig späteren Zeitpunkt stellt, die identische Auskunft erhält. Diese Abfrage ist beispielsweise ein lesender Zugriff auf ein Interruptregister. Dieser lesende Zugriff wird wie oben beschrieben behandelt, wodurch sichergestellt ist, daß alle CPUs den gleichen Interruptvektor lesen und die gleichen Aktionen einleiten.

Vor dem Verlassen des gesonderten Betriebsmodus wird der Zähler CIC zurückgesetzt. Anschließend wird zu der Programmstelle zurückgesprungen, an der die Unterbrechung durch das Erreichen des durch das Register MIR vorgegeben Zählerwertes CIC stattgefunden hat. Danach wird die CPU wieder die durch das Register MIR vorgegebene Anzahl von Maschineninstruktionen ausführen und bei Erreichen des Registerwertes MIR durch Zähler CIC den Mode wechseln und dadurch die Annahme von externen Ereignissen ermöglichen.

Beispielsweise kann eine den emulierten Lockstep-Betrieb unterstützende Software ELSO das Register MIR auf einen Wert von 10.000 setzen. Eine CPU, die mit 5 GHz Taktfrequenz betrieben wird und im Mittel einen Maschinenbefehl pro Takt (Länge eines Taktes: 1/200 ps) ausführt, würde so nach 2 µs in der Befehlsausführung unterbrochen werden und die Synchronisation mit externen Ereignissen ermöglichen.

### Direkter Speicherzugriff DMA

Bei einer DMA-Transaktion (Direct Memory Access) kann eine I/O-Einheit direkt auf den Hauptspeicher lesend und schreibend zugreifen. Der zeitliche Zusammenhang eines Zugriffs von der I/O-Einheit und der CPU ist nicht gegeben. Würde die CPU während eines DMA-Transfers auf denselben Speicherbereich zugreifen, so könnten Verarbeitungseinheiten ihre pseudosynchrone Arbeitsweise verlieren, da die Hauptspeicher der Verarbeitungseinheiten zum Zeitpunkt des Zugriffs nicht mehr notwendigerweise identisch sind.

Für eine DMA-Transaktion muß daher gewährleistet sein, daß eine Benachrichtigung an die CPU gesendet wird, die auf allen CPUs an der gleichen Stelle in der Befehlsausführung eintrifft. Im folgenden werden hierfür mehrere Lösungen aufgezeigt.
- Beispielsweise kann die Benachrichtigung erfolgen, indem die I/O-Einheit nach Abschluß des DMA-Transfers einen Interrupt erzeugt, welcher der CPU bekannt gibt, daß der Transfer abgeschlossen und der transferierte Speicherbereich wieder freigegeben ist. Als Folge des Interrupts wird der Interrupt-Status von der Quelle, also von der I/O-Einheit, gelesen. Dieses Lesen über den I/O-Bus beider Einheiten, z.B. den PCI-Bus, erzwingt eine Serialisierung der Transaktionen, so daß von den I/O-Einheiten generierte Daten in der Folge garantiert im Hauptspeicher aller Verarbeitungseinheiten stehen.
- In einer anderen Ausgestaltung kann bei der Übergabe von durch die CPU einer Verarbeitungseinheit generierten Aufträge an die I/O-Einheiten durch die CPU ein Eintrag in ein Register erfolgen, was den DMA-Transfer auslöst. Alternativ können Scripts oder Listen, die sowohl von CPU als auch von der I/O-Einheit gleichzeitig benutzt werden, als lokaler Speicher bei der I/O-Einheit liegen. Ein möglicher Zugriff von der CPU geschieht dann wie ein memory mapped Read- oder Write-Befehl, und es ist sichergestellt, daß alle CPUs mit denselben Daten arbeiten.
   In der anderen Richtung, wenn ein von der I/O-Einheit bzw. den I/O-Einheiten generierter Deskriptor des Auftrages für die CPU im Hauptspeicher einer Verarbeitungseinheit PRO liegen soll und von den CPUs mit einem Polling-Verfahren ausgelesen wird, lesen die CPUs ein sogenanntes I/O-lockout-Register. Daraufhin wird vom Equalizer zumindest keine Schreibtransaktion der I/O-Einheiten mehr in den lokalen Hauptspeicher der Verarbeitungseinheiten PRO gesendet, und die zuletzt von den I/O-Einheiten gesendeten Schreibtransaktionen werden durch die Equalizer in die lokalen Hauptspeicher aller Verarbeitungseinheiten geschrieben. Dies wird häufig als "to flush" (ausspülen) bezeichnet. Dadurch wird gleicher Inhalt in den Hauptspeichern aller Verarbeitungseinheiten in Bezug auf von I/O-Einheiten generierte Schreibtransaktionen sichergestellt. Anschließend wird die Speicherstelle im Hauptspeicher von allen CPUs gelesen, deren Wert z.B. den Abschluß eines I/O-Auftrags anzeigt. Danach wird das I/Olockout Register erneut gelesen oder geschrieben oder es wird ein I/O-free Register gelesen oder geschrieben, um den Schreibzugriff auf den Hauptspeicher durch die I/O-Einheiten wieder zu ermöglichen.
- In einer weiteren Ausgestaltung kann das folgende verfahren angewandt werden, wenn der von der CPU bzw. den CPUs generierte Deskriptor des Auftrages für die I/O-Einheiten im Hauptspeicher der PRO liegen soll, und von diesen per Polling-Verfahren ausgelesen wird: Die CPUs lesen ein sogenanntes I/O-lockout Register. Daraufhin wird von Equalizer zumindest keine Lesetransaktion der I/O-Einheiten mehr zum Hauptspeicher der Verarbeitungseinheiten gesendet. Anschließend wird die Speicherstelle im Hauptspeicher aller CPUs mit einem Wert beschrieben, der einen Trigger bzw. Auslöser für einen I/O-Auftrag darstellt. Danach wird das I/O-lockout Register erneut gelesen oder beschrieben oder es wird ein I/O-free Register gelesen oder beschrieben, um den Lesezugriff auf den Hauptspeicher durch die I/O-Einheiten wieder zu ermöglichen.

### Datenvergleich

Alle Daten, die von I/O-Einheiten aus dem Hauptspeicher gelesen werden, werden durch alle Equalizer aus dem Hauptspeicher der angeschlossenen Verarbeitungseinheiten gelesen, vollständig oder als Signatur, und an den an die anfordernde I/O-Einheit angeschlossenen Equalizer gesendet und von diesem verglichen. Alternativ können die anderen Equalizer ebenfalls einen Vergleich durchführen. Im Falle von Gleichheit werden die Daten an die I/O-Einheit weitergereicht. Falls ein Unterschied erkannt wird, wird gegebenenfalls eine Mehrheitsentscheidung getroffen, z.B. 2 aus 3, und die fehlerhafte Einheit wird abgetrennt und diagnostiziert.

Alle Daten, die von den CPUs der Verarbeitungseinheiten generiert werden, werden vollständig oder als Signatur an den an die Ziel-I/O-Einheit angeschlossenen Equalizer gesendet und durch diesen verglichen. Alternativ können die anderen Einheiten ebenfalls einen Vergleich durchführen. Im Falle von Gleichheit werden die Daten an die I/O-Einheit weitergereicht. Falls ein Unterschied auftritt, wird gegebenenfalls eine Mehrheitsentscheidung getroffen, z.B. 2 aus 3, und die fehlerhafte Einheit wird abgetrennt und diagnostiziert.

Alle durch die CPUs der Verarbeitungseinheit generierten Leseanforderungen, charakterisiert beispielsweise durch das Lesekommando, Adressen und Attribute werden vollständig oder als Signatur an den an die Quelle angeschlossenen Equalizer gesendet und von diesem verglichen. Alternativ können die anderen Einheiten ebenfalls einen Vergleich durchführen. Im Falle von Gleichheit werden die Lesetransaktionen durchgeführt, und die gelesenen Daten an alle Equalizer gesendet. Falls eine Abweichung auftritt, wird gegebenfalls eine Mehrheitsentscheidung getroffen, z.B. 2 aus 3, und die fehlerhafte Einheit wird abgetrennt und diagnostiziert.

Bei emuliertem Lockstep werden Lese- und Schreibtransaktionen der CPU bezüglich ihres lokalen Hauptspeichers MEM nicht verglichen, da diese vollkommen unterschiedlich sein können, z.B. aufgrund unterschiedlicher spekulativer Zugriffe der CPUs oder unterschiedlichem Cache-Verhalten. Um die Inhalte von Speicherbereichen der unterschiedlichen Verarbeitungseinheiten PRO auf Gleichheit zu überprüfen, muß eine Überprüfung durch z.B. eine Routining-Software zu einem Zeitpunkt angestoßen werden, zu dem man sicherstellen kann, daß die Speicherinhalte im fehlerfreien Zustand konsistent sind und für die Dauer der Überprüfung konsistent bleiben. Die Speicherüberprüfung selbst kann durch Software erfolgen, d.h. die Software/CPU liest z.B. einen Speicherbereich, bildet eine Prüfsumme und vergleicht die von den unterschiedlichen Verarbeitungseinheiten ermittelten Prüfsummen. Die Speicherüberprüfung kann aber auch durch Hardware erfolgen, indem z.B. in den Equalizern angeordnete Vorrichtungen den Speicher der angeschlossenen Verarbeitungseinheiten lesen, eine Checksumme bilden und untereinander vergleichen.

### Multiprozessor-Architektur mit shared memory

Der emulierte Lockstep-Betrieb ist auch dazu geeignet, Speicherzugriffe mehrerer Verarbeitungseinheiten auf einen gemeinsamen Speicher (shared memory) CMEM zu synchronisieren und einen wie oben beschrieben Datenvergleich durchzuführen, vorausgesetzt, daß die Transaktionen den eingangs erläuterten Randbedingungen genügen; beispielsweise also non-cachable Speichertransaktionen.

Damit ist es in einer Weiterbildung möglich, Multiprozessor-Konfigurationen zu definieren, die aus mehreren Prozessoreinheiten (mit lokalen Speichern) bestehen, die alle auf einen gemeinsamen Speicher CMEM zugreifen können. Dabei ist jede Prozessoreinheit aus Gründen der Redundanz und zur Fehlererkennung in sich gedoppelt, d.h. eine Prozessoreinheit besteht aus zwei identischen Verarbeitungseinheiten PRO (nicht dargestellt), die in der oben beschriebenen Weise alle Tasks parallel ausführen und sich u.a. bei Zugriff auf den gemeinsamen Speicher synchronisieren und dabei einen Datenvergleich ausführen.

## Patentansprüche

1. Verfahren zur Synchronisation identischer oder verschiedener, redundanter Verarbeitungseinheiten (PRO₀, PRO₁), die identische Instruktionsfolgen abarbeiten und synchron oder asynchron getaktet sind, demgemäß nach außerhalb der Verarbeitungseinheiten (PRO₀, PRO₁) wirkende Transaktionen durch den Verarbeitungseinheiten (PRO₀, PRO₁) zugeordnete Bausteine (EQ₀, EQ₁) zur Synchronisation der Verarbeitungseinheiten (PRO₀, PRO₁) verwendet werden, indem die Verarbeitungseinheiten jeweils durch die zugeordneten Bausteine in einen Wartezustand versetzt werden, bis die Instruktionsausführung aller Verarbeitungseinheiten die aktuelle Transaktion erreicht hat.

2. Verfahren nach Anspruch 1,
**dadurch gekennzeichnet,**
**daß** durch die Bausteine (EQ₀, EQ₁) folgende Transaktionen zur Synchronisation der verarbeitungseinheiten (PRO₀, PRO₁) verwendet werden:
- nicht-zwischenspeicherbare Speichertransaktionen betreffend einen den jeweiligen Verarbeitungseinheiten (PRO₀, PRO₁) zugeordneten lokalen Speicher (MEM₀, MEM₁) und/oder
- Eingabe/Ausgabetransaktionen zu Eingabe/Ausgabebausteinen (I/O₀, I/O₁) und/oder
- speicherabgebildete Ein/Ausgabetransaktionen zu externen Registern (REG₀, REG₁) und/oder
- nicht-zwischenspeicherbare Speichertransaktionen betreffend einen gemeinsamen Speicher (CMEM) der Verarbeitungseinheiten (PRO₀, PRO₁).

3. Verfahren nach einem der Ansprüche 1 oder 2,
**dadurch gekennzeichnet,**
**daß** durch die Bausteine (EQ₀, EQ₁) folgende Parameter von Transaktionen über Verbindungen (L₀, L₁) zur Synchronisation der Verarbeitungseinheiten (PRO₀, PRO₁) übermittelt werden:
- Eingabe/Ausgabeadressen und/oder
- Speicheradressen und/oder
- zu transferierende Daten und/oder
- Art der Transaktion und/oder
- eine aus den Eingabe/Ausgabeadressen und/oder den Speicheradressen und/oder den zu transferierenden Daten und/oder der Art der Transaktion gebildete Signatur.

4. Verfahren nach Anspruch 3,
**dadurch gekennzeichnet,**
**daß** eine lesende Transaktion ausgeführt wird, indem der einer Verarbeitungseinheit zugeordnete Baustein die Verarbeitungseinheit bis zum Eintreffen der zu lesenden Daten im Wartezustand beläßt und den oder die Parameter der lesenden Transaktion an den am direktesten mit dem Transaktionsziel (I/O₀, I/O₁, MEM₀, MEM₁, REG₀, REG₁, CMEM) verbundenen Baustein sendet, wobei der am direktesten mit dem Transaktionsziel verbundene Baustein den oder die Parameter der anderen Bausteine sowie den oder die lokal erzeugten Parameter empfängt und vergleicht und bei Übereinstimmung die lesende Transaktion ausführt und die gelesenen Daten an alle Bausteine verteilt, woraufhin alle Bausteine die gelesenen Daten an die zugeordneten Verarbeitungseinheiten weiterleiten und die Fortsetzung der Instruktionsausführung veranlassen.

5. Verfahren nach Anspruch 4,
**dadurch gekennzeichnet,**
**daß** ein Datenvergleich zur Überprüfung der Datenintegrität durchgeführt wird, indem regelmäßig oder auf Anforderung Datenbereiche aus den Hauptspeichern (MEM₀, MEM₁) gelesen und ihre Parameter verglichen werden, wobei der Vergleich durch einen ausgewählten oder durch alle Bausteine erfolgt.

6. Verfahren nach Anspruch 3,
**dadurch gekennzeichnet,**
**daß** eine schreibende Transaktion ausgeführt wird, indem der einer Verarbeitungseinheit zugeordnete Baustein die Verarbeitungseinheit bis zum Abschluß des Schreibenvorganges im Wartezustand beläßt und den oder die Parameter der schreibenden Transaktion an den am direktesten mit dem Transaktionsziel (I/Oₒ, I/O₁, MEM₀, MEM₁, REG₀, REG₁, CMEM) verbundenen Baustein sendet, wobei der am direktesten mit dem Transaktionsziel verbundene Baustein den oder die Parameter der anderen Bausteine sowie den oder die lokal erzeugten Parameter empfängt und vergleicht und bei Übereinstimmung die schreibende Transaktion ausführt und den erfolgten Schreibvorgang an alle Bausteine quittiert, woraufhin alle Bausteine die Fortsetzung der Instruktionsausführung der zugeordneten Verarbeitungseinheiten veranlassen.

7. Verfahren nach Anspruch 3,
**dadurch gekennzeichnet,**
**daß** externe Ereignisse behandelt werden, indem die externen Ereignisse zwischengespeichert werden, wobei die gespeicherten externen Ereignisse in einem gesonderten Betriebsmodus der Verarbeitungseinheiten zur Verarbeitung durch zumindest je eine Ausführungseinheit der Verarbeitungseinheiten abgerufen werden und wobei die Verarbeitungseinheiten in diesen Betriebsmodus ansprechend auf die Erfüllung einer durch Befehle vorgebbaren oder fest vorgegebenen Bedingung eintreten und die Fortsetzung der Instruktionsausführung durch die Bausteine (EQ₀, EQ₁) verzögert wird, bis alle Verarbeitungseinheiten den gesonderten Betriebsmodus beendet haben.

8. Verfahren nach Anspruch 7,
**dadurch gekennzeichnet,**
**daß** der Wechsel in den gesonderten Betriebsmodus ausgeführt wird, falls durch Komparatorelemente (K) der Verarbeitungseinheiten die Übereinstimmung von Zählelementen (CIC) mit Registerelementen (MIR) ermittelt wird, wobei der Inhalt der Registerelemente (MIR) durch Befehle vorgebbar und für alle Verarbeitungseinheiten (PRO₀, PRO₁) identisch ist und das Zählelement (CIC) die Anzahl der durch die Ausführungseinheit ausgeführten Instruktionen seit dem letzten Wechsel in den gesonderten Betriebsmodus enthält.

9. Verfahren nach einem der Ansprüche 7 oder 8,
**dadurch gekennzeichnet,**
**daß** die den Verarbeitungseinheiten zugeführten externen Ereignisse eine Ereignisbehandlungsroutine auslösen, die mit der lesenden Transaktion eines Ereignisvektors beginnt, wobei die lesende Transaktion ausgeführt wird, indem der der Verarbeitungseinheit zugeordnete Baustein die Verarbeitungseinheit bis zum Eintreffen der zu lesenden Daten im Wartezustand beläßt und den oder die Parameter der lesenden Transaktion an den am direktesten mit dem Transaktionsziel (I/O₀, I/O₁, MEM₀, MEM₁, REG₀, REG₁, CMEM) verbundenen Baustein sendet, wobei der am direktesten mit dem Transaktionsziel verbundene Baustein den oder die Parameter der anderen Bausteine sowie den oder die lokal erzeugten Parameter empfängt und vergleicht und bei Übereinstimmung die lesende Transaktion ausführt und die gelesenen Daten an alle Bausteine verteilt, woraufhin alle Bausteine die gelesenen Daten an die zugeordneten Verarbeitungseinheiten weiterleiten und die Fortsetzung der Instruktionsausführung veranlassen.

10. Verfahren nach Anspruch 3,
**dadurch gekennzeichnet,**
**daß** ein direkter Speicherzugriff zur Übertragung von Daten aus dem Speicher an einen Eingabe/Ausgabebaustein (I/O₀, I/O₁) erfolgt, indem der direkte Speicherzugriff initiiert wird, indem von einer Verarbeitungseinheit generierte Aufträge an den Eingabe/Ausgabebaustein durch Eintrag in ein Register übergeben werden.

11. Verfahren nach Anspruch 3,
**dadurch gekennzeichnet,**
**daß** ein direkter Speicherzugriff zur Übertragung von Daten von einem Eingabe/Ausgabebaustein (I/O₀, I/O₁) in den Speicher erfolgt,
- indem in einem ersten Schritt ein von dem Eingabe/Ausgabebaustein erzeugter Deskriptor im Speicher abgelegt und von den Verarbeitungseinheiten mit einem Polling-Verfahren ausgelesen wird,
- indem in einem zweiten Schritt ein Register in einem der Bausteine (EQ₀, EQ₁) durch die Verarbeitungseinheiten gelesen wird, das bewirkt, daß keine Schreibtransaktionen in den Speicher durch Eingabe/Ausgabebausteine mehr zulässig sind,
- indem in einem dritten Schritt die zuletzt von den Eingabe/Ausgabebausteinen gesendeten Schreibtransaktionen durch die Bausteine (EQ₀, EQ₁) in die Speicher aller Verarbeitungseinheiten geschrieben werden,
- indem in einem vierten Schritt eine Speicherstelle im Speicher von allen Verarbeitungseinheiten gelesen wird, deren Wert den Abschluß eines direkten Speicherzugriffs anzeigt, und
- indem in einem fünften Schritt das Register erneut gelesen wird oder indem ein weiteres Register gelesen oder beschrieben wird, um den Schreibzugriff auf den Hauptspeicher durch die I/O-Einheiten wieder zu ermöglichen.

12. Verfahren nach Anspruch 3,
**dadurch gekennzeichnet,**
**daß** ein direkter Speicherzugriff zur Übertragung von Daten zwischen einem Eingabe/Ausgabebaustein (I/O₀, I/O₁) und dem Speicher erfolgt,
- indem in einem ersten Schritt ein Register in einem der Bausteine (EQ₀, EQ₁) durch die Verarbeitungseinheiten gelesen wird, das bewirkt, daß keine Lesetransaktionen in den Speicher durch die Eingabe/Ausgabebausteine mehr zulässig sind,
- indem in einem zweiten Schritt ein von den Verarbeitungseinheiten erzeugter Deskriptor im Speicher abgelegt wird, der durch einen oder mehrere Eingabe/Ausgabebaustein(e) (I/O₀, I/O₁) mit einem Polling-Verfahren auslesbar ist,
- indem in einem dritten Schritt das Register erneut gelesen wird oder indem ein weiteres Register gelesen oder beschrieben wird, um den Lesezugriff auf den Hauptspeicher durch die I/O-Einheiten wieder zu ermöglichen, und indem in einem vierten Schritt eine Speicherstelle im Speicher von einem oder mehreren Eingabe/Ausgabebaustein(en) (I/O₀, I/O₁) gelesen wird, deren Wert den Beginn eines direkten Speicherzugriffs anzeigt

13. Verfahren nach einem der Ansprüche 4 bis 8,
**dadurch gekennzeichnet,**
**daß** durch den am direktesten mit dem Transaktionsziel verbundene Baustein bei Feststellung einer Abweichung der Parameter der anderen Bausteine sowie des oder der lokal erzeugten Parameter(s) eine Fehlerbehandlung eingeleitet wird.

14. Verfahren nach Anspruch 13,
**dadurch gekennzeichnet,**
**daß** die Fehlerbehandlung die auszuführende Transaktion stoppt und eine Routine zur Detektion der fehlerhaften Einheit, deren Isolierung und/oder Wiederherstellung der Synchronität startet.

15. Verfahren nach Anspruch 13,
**dadurch gekennzeichnet,**
**daß** die Fehlerbehandlung bei N vorhandenen Verarbeitungseinheiten eine N-M (M < N) aus N Mehrheitsentscheidung trifft und die abweichende Verarbeitungseinheit deaktiviert.

16. Verfahren nach einem der Ansprüche 3 bis 15,
**dadurch gekennzeichnet,**
**daß** eine Ausfallerkennung einzelner Verarbeitungseinheiten erfolgt, indem für eine beliebige Transaktion beginnend mit dem frühesten Verfügbarwerden des oder der Parameter(s) beim Baustein einer Verarbeitungseinheit nicht oder erst nach Ablauf einer vorgebbaren Zeit eintreffende Parameter verworfen werden, wobei für Verarbeitungseinheiten mit nicht oder erst nach Ablauf der vorgebbaren Zeit eintreffenden Parametern eine Fehlerbehandlung initiiert wird.

17. Anordnung zur Synchronisation synchron oder asynchron getakteter Verarbeitungseinheiten (PRO₀, PRO₁) redundanter Datenverarbeitungssysteme, die folgendes aufweist:
- mindestens zwei Verarbeitungseinheiten (PRO₀, PRO₁) zur Abarbeitung identischer Instruktionsfolgen,
- den Verarbeitungseinheiten jeweils exklusiv zugeordnete Peripherie (MEM₀, MEM₁) zum Speichern und/oder Austauschen von Daten,
- von allen Verarbeitungseinheiten gemeinsam nutzbare Peripherie (I/O₀, I/O₁, REG₀, REG₁, CMEM) zum Speichern und/oder Austauschen von Daten,
- den Verarbeitungseinheiten zugeordnete Bausteine (EQ₀, EQ₁) , wobei die Bausteine (EQ₀, EQ₁) Mittel zum Überwachen von Transaktionen sowie Mittel zum Auslösen eines Wartezustandes der zugeordneten Verarbeitungseinheit bis zum Erreichen der aktuellen Transaktion durch alle Verarbeitungseinheiten aufweisen sowie Mittel (L₀, L₁) zum Übertragen von Parametern der Transaktionen an andere Bausteine.

18. Anordnung nach Anspruch 17,
**dadurch gekennzeichnet,**
**daß** die Bausteine (EQ₀, EQ₁) Mittel zum Synchronisieren der Verarbeitungseinheiten anhand folgender Transaktionen aufweisen:
- nicht-zwischenspeicherbare Speichertransaktionen betreffend einen den jeweiligen Verarbeitungseinheiten (PRO₀, PRO₁) zugeordneten lokalen Speicher (MEM₀, MEM₁) und/oder
- Eingabe/Ausgabetransaktionen zu Eingabe/Ausgabebausteinen (I/O₀, I/O₁) und/oder
- speicherabgebildete Ein/Ausgabetransaktionen zu externen Registern (REG₀, REG₁) und/oder
- nicht-zwischenspeicherbare Speichertransaktionen betreffend einen gemeinsamen Speicher (CMEM) der Verarbeitungseinheiten (PRO₀, PRO₁) .

19. Anordnung nach einem der Ansprüche 17 oder 18,
**dadurch gekennzeichnet,**
**daß** die Bausteine Mittel zum Bilden folgender Parameter repräsentativ für Transaktionen aufweisen: Eingabe/Ausgabeadressen und/oder
- Speicheradressen und/oder
- zu transferierende Daten und/oder
- Art der Transaktion und/oder
eine aus den Eingabe/Ausgabeadressen und/oder den Speicheradressen und/oder den zu transferierenden Daten und/oder der Art der Transaktion gebildete Signatur.

20. Anordnung nach einem der Ansprüche 17 bis 19, wobei jede Verarbeitungseinheit folgendes aufweist:
- mindestens eine Ausführungseinheit (EU),
- mindestens ein Zählerelement (CIC) zum Zählen der durch die Ausführungseinheit ausgeführten Instruktionen seit dem letzten Wechsel in den gesonderten Betriebsmodus,
- mindestens ein Registerelement (MIR), dessen Inhalt durch Befehle vorgebbar oder fest vorgegeben ist,
- mindestens ein Komparatorelement (K) zum Umschalten der Ausführungseinheit (EU) in einen gesonderten Betriebsmodus ansprechend auf die Übereinstimmung des Zählelementes (CIC) mit dem Registerelement (MIR), wobei in dem gesonderten Betriebsmodus zwischengespeicherte, den Prozessorbausteinen zuzuführende externe Ereignisse, welche die Prozessorbausteine beeinflussen, durch die Prozessorbausteine abgerufen werden.
